# EUROPÄISCHE PATENTSCHRIFT

(11) **EP 1 974 688 B1**
(45) Veröffentlichungstag und Bekanntmachung des Hinweises auf die Patenterteilung: **13.01.2016**
(21) Anmeldenummer: 08005998.3
(22) Anmeldetag: 28.03.2008
(51) Int. Cl.: A61C 13/00

(54) **Verfahren zum Herstellen von Zahnersatzteilen, Verfahren zum Erstellen eines Datensatzes und computerlesbares Medium**
Method for manufacturing teeth replacements, method for producing a data record and computer readable medium
Procédé destiné à la fabrication de prothèses dentaires, procédé d'établissement d'un ensemble de données et support lisible sur ordinateur

(30) Priorität: 28.03.2007 DE 102007014985
(43) Veröffentlichungstag der Anmeldung: 01.10.2008
(73) Patentinhaber: Institut Straumann AG, 4002 Basel (CH)
(72) Erfinder: Holzner, Stephan, 80269 Hohenschäftlarn (DE); Weber, Gerhard, 86932 Pürgen (DE)
(74) Vertreter: Grünecker Patent- und Rechtsanwälte PartG mbB

(56) Entgegenhaltungen:
- EP-A- 1 759 682
- WO-A-2007/005490
- US-A- 5 997 681
- US-B1- 7 153 135
- DIMOV, PHAM, LACAN, DOTCHEV: "rapid tooling applications of the selctive laser sintering process", ASSEMBLY AUTOMATION, vol. 21, no. 4, 31 December 2001 (2001-12-31), pages 296-301, 2001

## Beschreibung

Die Erfindung betrifft ein Verfahren zum Herstellen eines Zahnersatzteils, ein Verfahren zum Erstellen eines Datensatzes sowie ein computerlesbares Medium.

Aus dem Stand der Technik ist es bekannt, Zahnersatzteile beispielsweise mit dem Lasersintern herzustellen. Hierbei wird beispielsweise ein Metallpulver lokal aufgeschmolzen, so dass es sich nach dem Abkühlen in dem aufgeschmolzenen Bereich verfestigt. Auf diese Weise kann durch lageweises Aufbringen von Pulver und anschließendes selektives Sintern desselben ein dreidimensionales Zahnersatzteil hergestellt werden. Nachteilig bei diesem Verfahren ist, dass durch das lageweise Aufbringen von Material und das anschließende lokale Sintern sich in der Regel stufenförmige bzw. sehr raue Oberflächen ergeben. Die Präzision, die für Zahnersatzteile gewünscht wird, ist so oft nicht erreichbar.

EP 1 759 682 A2 offenbart die Herstellung eines Negativmodells einer Zahnsituation mittels Rapidprototyping, wobei das Negativmodell eine Größe besitzen kann, die gleich oder größer als die Zahnsituation ist, abhängig davon, wie der auf dem Negativmodell abgeschiedene Schlicker danach weiterbehandelt wird. Zudem offenbart EP 1 759 682 A2 die Herstellung eines Zahnrads mittels eines Negativmodells, das mit Rapidprototyping hergestellt wurde, wobei das Negativmodell eine vergrößerte Form des Zahnrads aufweist. Vor dem Dichtsintern wird das Zahnrad bearbeitet, um abgeschiedenen, überflüssigen Schlicker zu entfernen.

In US 5,997,681 wird ein Materialblock durch ein abtragendes Verfahren bearbeitet, um überschüssiges Material zu entfernen und ein dreidimensionales Objekt herzustellen. Daten, die der Form dieses Objekts entsprechen, werden analysiert, um eine optimale Kombination von hinzufügenden und abtragenden Verfahren zu bestimmen. An Stufen dieses Objekts, wo die Geometrie oder ein Wechsel des Materials das Hinzufügen von Material und die Erzeugung einer neuen Arbeitsebene erfordert, wird ein ganzer Materialblock durch Beschichtung hinzugefügt.

Weiterhin ist es aus dem Stand der Technik bekannt, Zahnersatzteile aus Vollmaterial auszufräsen. Hiermit können Zahnersatzteile mit ausreichend hoher Präzision hergestellt werden. Hierbei kann jedoch der Materialverbrauch recht erheblich sein, so dass die Herstellung kostenintensiv ist.

Aufgabe der vorliegenden Erfindung ist es, ein Verfahren zum Herstellen eines Zahnersatzteils, ein Verfahren zum Erstellen eines Datensatzes und ein computerlesbares Medium zur Verfügung zu stellen, mit dem Zahnersatzteile möglichst kostengünstig und gleichzeitig mit ausreichend hoher Präzision hergestellt werden können.

Diese Aufgabe wird gelöst mit einem Verfahren nach Anspruch 1 oder 4 sowie mit einem computerlesbaren Medium nach Anspruch 8.

Bevorzugte Ausführungsformen sind in den abhängigen Ansprüchen offenbart.

Bei dem Verfahren wird ein Zahnersatzteil mit einem Rapidprototyping-Verfahren hergestellt. Dies ist relativ schnell und kostengünstig möglich, da Material für das Zahnersatzteil nur in dem Umfang verbraucht wird, wie es konkret für ein Zahnersatzteil benötigt wird.

Die so hergestellten Zahnersatzteile werden anschließend mit einem abtragenden Verfahren wie etwa einem Fräsverfahren bearbeitet. Hierdurch kann die gewünschte Präzision der Zahnersatzteile erreicht werden. Die Bearbeitung kann z.B. eine Nachbearbeitung sein, bei der lediglich geringe Modifikationen des Zahnersatzteils vorgenommen werden, wie etwa Glättungen von Oberflächen etc., das Zahnersatzteil aber im Wesentlichen schon fertig ist.

Insbesondere wird hierbei beispielsweise vermieden, dass ein Werkzeug eines abtragenden Verfahrens (z.B. Fräskopf beim Fräsen) sich relativ lange damit beschäftigt Material abzutragen, das weit weg von der Oberfläche des Zahnersatzteils ist, so dass sich das Abtragen im wesentlichen auf eine Feinbearbeitung beschränken kann, die jedoch relativ schnell durchgeführt werden kann.

Das Rapidprototyping-Verfahren kann ein Lasersinter-Verfahren sein (wie oben bereits beschrieben) oder auch jedes andere Rapidprototyping-Verfahren, wie beispielsweise die Stereolithographie, das Lasergenerieren, das Fused-depostion-modeling, das Laminated-objectmodeling, das 3-D-Drucken, Contour-crafting oder ein Multi-Jet-Modeling sowie ein Polyjet-Verfahren.

Jedes dieser Verfahren ist geeignet, ein Zahnersatzteil herzustellen, so dass es anschließend mit einem abtragenden Verfahren wie einem Fräsverfahren (nach)bearbeitet werden kann.

Bei Zahnersatzteilen, die verkleidet werden sollen, ist eine gewisse Oberflächenrauigkeit in bestimmten Bereichen durchaus wünschenswert. An rauen Oberflächen lassen sich beispielsweise Porzellanverkleidungen oder andere Verkleidungen gut haltend anbringen. In so fern kann die mit einem Rapidprototyping erzeugte raue Oberfläche von Vorteil sein.

Bei einem Fräsverfahren kann ein Stahl- oder noch besser ein Diamantfräser eingesetzt werden. Mit Diamantfräsern lassen sich besonders präzise und glatte Oberflächen herstellen.

Besonders vorteilhaft ist ein Verfahren, bei dem insbesondere der Bereich einer Präparationsgrenze bzw. der Innenbereich eines Zahnersatzteils mit dem Fräsverfahren (nach)bearbeitet wird. Insbesondere im Bereich der Präparationsgrenze ist eine möglichst exakte Form des Zahnersatzteils gewünscht, um so einen guten Abschluss zu erreichen. Auf der Außenseite ist eine Nachbearbeitung in der Regel eher nicht gewünscht, da hier eine raue Oberfläche, insbesondere zum Verkleiden, vorteilhaft sein kann. Soll das Zahnersatzteil nicht verkleidet werden, so kann jedoch auch außen eine Nachbearbeitung mit einem abtragenden Verfahren (z.B. Fräsverfahren) stattfinden.

Weiterhin ist ein solches Verfahren vorteilhaft, bei dem mit dem Rapidprototyping-Verfahren eine Referenzierung erzeugt wird. Diese Referenzierung kann verwendet werden, um das Zahnersatzteil bzw. ein Fräswerkzeug für den Fräsvorgang zu positionieren. Anhand der Referenzierung kann also die Position des hergestellten Zahnersatzteils für den Fräsvorgang erkannt und/oder definiert werden.

Weiterhin ist es vorteilhaft, wenn mit dem Rapidprototyping-Verfahren ein Gerüst bzw. ein Rahmen erzeugt wird, in dem Zahnersatzteile gehalten werden, so dass die Zahnersatzteile beispielsweise für das abtragende Verfahren wie etwa den Fräsvorgang mit dem Rahmen oder dem Gerüst transportiert und/oder positioniert werden können.

Mit dem abtragenden Verfahren sollen vorteilhafter Weise insbesondere die bearbeiteten Bereiche geglättet werden.

Weiter ist es vorteilhaft, wenn in wenigstens einem bestimmten Bereich mit dem Rapidprototyping-Verfahren ein Materialüberschuss ausgebildet wird und in diesem Bereich anschließend eine Nachbearbeitung stattfindet, wobei der Materialüberschuss (zumindest teilweise) abgetragen wird.

Bei dem Verfahren können Zahnersatzteile aus verschiedensten Materialien hergestellt werden. So ist ein Zahnersatzteil aus Kunststoff, (glas)faserverstärktem Kunststoff aus einem glasfaserverstärkten Copolyamid möglich. Auch ist ein Metall oder eine Metalllegierung, wie beispielsweise Kobalt, Kobaltlegierung, Chromkobaltlegierung, Titan oder Titanlegierung, Gold oder eine Goldlegierung denkbar. Auch eine Keramik, wie etwas eine Zirkonkeramik (insbesondere eine yttriumstabilisierte Zirkonkeramik) oder Aluminiumoxid sind als Material des Zahnersatzteils möglich.

Weiterhin ist eine Ausführungsform vorteilhaft, bei der ein hergestelltes Zahnersatzteil nach dem Herstellen und vor dem Bearbeiten gesintert wird. Damit lässt sich das formgebende Herstellungsverfahren des Zahnersatzteils abschließen und dadurch die exakt gewünscht Form herstellen. Ein Verziehen des Zahnersatzteils durch ein anschließendes Sintern wird somit ausgeschlossen. Es ist jedoch auch möglich, ein Zahnersatzteil erst mit einem Fräsverfahren nachzubearbeiten und anschließend dichtzusintern. Dies ist insbesondere im Bezug auf den Verschleiß von Fräswerkzeugen vorteilhaft, der bei der Bearbeitung von noch nicht ganz durchgesinterten Materialien vergleichsweise niedrig ist.

Bei einem Verfahren zum Erstellen eines Datensatzes, der für ein Rapid-Prototyping-Verfahren zum Herstellen eines Zahnersatzteils verwendet werden kann, wird aus einem Ausgangsdatensatz ein Enddatensatz erhalten, so dass in wenigstens einem Bereich eines mit dem Enddatensatz hergestellten Zahnersatzteils ein Materialüberschuss vorhanden ist im Vergleich zu einem mit dem Ausgangsdatensatz hergestellten Zahnersatzteil. Mehrere Ausgangsdatensätze von verschiedenen Zahnersatzteilen werden zu Enddatensätzen verändert, und die mehreren Enddatensätze werden zu einem Produktionsdatensatz zusammengefasst, bei dem Verbinder wie etwa Stege, ein oder mehrere Rahmen oder ein oder mehrere Gerüste vorgesehen werden, die die verschiedenen Zahnersatzteile miteinander verbinden und wobei eine Referenzierung ausgebildet wird. Mit der Referenzierung ist die Position der Zahnersatzteile für ein abtragendes Verfahren bestimmbar und aus dem Datensatz, mit dem das Rapid-Prototyping-Verfahren durchgeführt wird, ist eine geometrische Beziehung zwischen den Zahnersatzteilen und der Referenzierung bekannt. Der Materialüberschuss ergibt sich durch den Vergleich der beiden Datensätze bzw. durch zwei gemäß dem jeweiligen Datensatz hergestellten Zahnersatzteile. Die Herstellung von den zwei Zahnersatzteilen gemäß den beiden Datensätzen soll nicht Teil des Verfahrens sein, sondern lediglich dazu dienen, den Materialüberschuss zu definieren.

Der Bereich oder die Bereiche, in denen ein Materialüberschuss vorhanden sein soll, kann automatisch bestimmt werden, wobei hierzu die Formdaten selber aber auch weitere Information in dem Ausgangsdatensatz verwendet werden kann. Die Information kann auch von einem Bediener eingegeben werden.

In dem Ausgangsdatensatz kann z.B. der Bereich einer Präparationsgrenze und/oder der Innenbereich gespeichert sein, neben den eigentlichen Formdaten. Die Information, welcher Teil der Form bzw. der Formdaten die Präparationsgrenze und/oder den Innenbereich darstellt ist somit bereits vorhanden. Die Information kann aber auch durch eine Computeranalyse automatisch erkannt werden oder durch einen Bediener eingegeben werden.

Ein oder mehrere Enddatensätze sowie auch ein Produktionsdatensatz können zur Herstellung der Zahnersatzteile mit einem entsprechenden Rapid-Prototyping-Verfahren dienen. Die so hergestellten Zahnersatzteile können anschließend mit einem abtragenden Verfahren, insbesondere mit einem Fräsverfahren bearbeitet werden.

Die Erfindung betrifft auch einen computerlesbaren Datenträger, der Instruktionen umfasst, die eines der obigen oder weiter unten beschriebenen Verfahren durchführen, wenn sie in einen Computer eingelesen werden.

Die Herstellung von Zahnersatzteilen kann also mit zwei verschiedenen computergestützten Herstellungsverfahren erfolgen, die nacheinander durchgeführt werden. Die Herstellung kann weiter batchweise (chargenweise) erfolgen. D.h. erst wird eine größere Anzahl von Zahnersatzteilen mit den ersten computergestützten Verfahren hergestellt und anschließend (nach Abschluss des ersten Verfahrens für alle damit hergestellten Zahnersatzteile) mit dem zweiten computergestützten Verfahren bearbeitet. Es können mehr als 50, 100, 150, 200 oder 250 Zahnersatzteile in einer Charge hergestellt werden.

Die Zahnersatzteile können Inlays, Overlays, Onlays, Käppchen, Kronen, Primärkronen, Sekundärkronen, Brücken, Gerüste, künstliche Gebisse (dritte Zähne), Abutments, Implantate, etc. sein.

Bevorzugte Ausführungsform des Verfahrens sollen anhand der beiliegenden Figuren erläutert werden. Dabei zeigt:
- Figur 1:: die konventionelle Herstellung von Zahnersatzteilen;
- Figur 2:: bestimmte typische Bereiche von Zahnersatzteilen;
- Figur 3:: die Form von Zahnersatzteilen gemäß einer Ausführungsform der Erfindung;
- Figur 4:: eine schematische Darstellung des Herstellungsverfahrens.

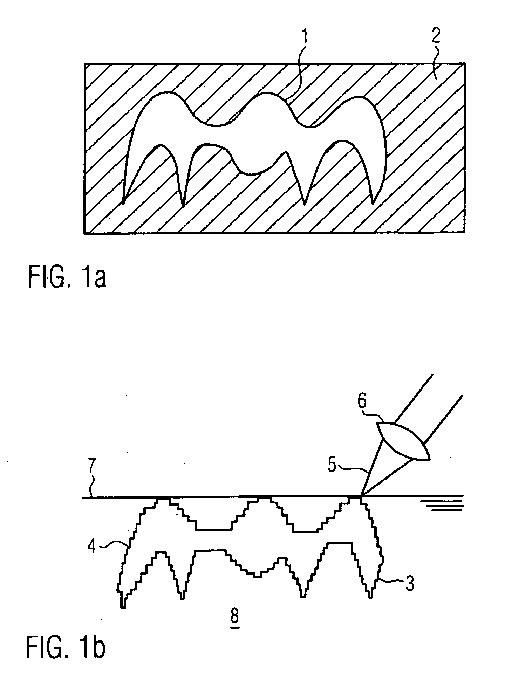

In Figur 1 a ist ein Rohling 2 gezeigt, aus dem ein Zahnersatzteil 1 ausgefräst werden kann. Hierzu muss der gesamte schraffierte Bereich an Material entfernt werden, was relativ Zeitaufwendig ist. Weiterhin ist bei diesem Fräsverfahren zu berücksichtigen, dass derjenige Teil des Rohlings 2, der nicht für das Zahnersatzteil 1 verwendet wird, zerspant wird, also nicht unmittelbar wieder verwendet werden kann.

In Figur 1 b ist ein Beispiel eines Rapidprototyping-Verfahrens, hier des Ladersinterns, gezeigt. Im Bereich 8 befindet sich ein pulverförmiges oder flüssiges Material, das schichtweise, beispielsweise mit einem Schieber aufgetragen wurde und lokal mit einem fokussierten (siehe Bezugszeichen 6) Laserstrahl 5 aufgeschmolzen (oder sonst wie modifiziert) wird, so dass es anschließend, nach dem Abkühlen (oder Ähnlichem), verfestigt ist. Die Oberfläche des Pulvers ist mit Bezugszeichen 7 gekennzeichnet.

In der Schnittdarstellung in Figur 1b weist das Zahnersatzteil 3 eine relativ große Oberflächenrauigkeit 4 auf. Dies ist die Folge des lagenartigen Aufbringens des zu verfestigenden Materials 8 und des lokalen Verfestigens. Dies führt regelmäßig zu stufenförmigen Oberflächen.

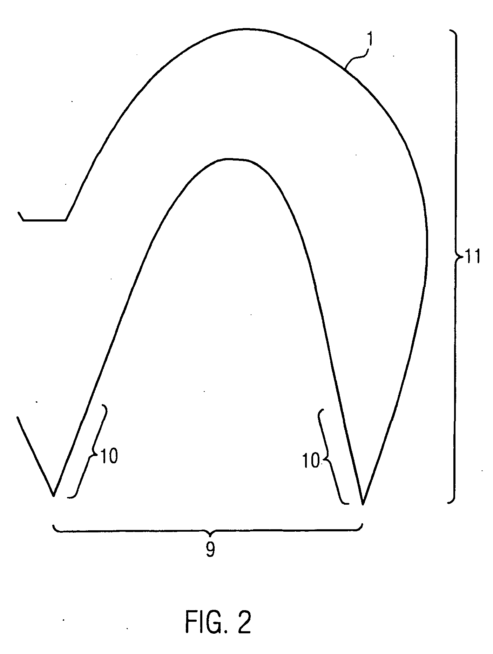

In Figur 2 ist ein Zahnersatzteil 1 im Schnitt vergrößert dargestellt. Es handelt sich hierbei um denjenigen Teil einer Brücke, der auf einen beschliffenen Zahn oder Implantatspfosten aufgesetzt werden soll. Derjenige Bereich, der mit dem beschliffenen Zahn oder dem Implantatspfosten in Kontakt kommt, ist der Innenbereich 9. Ein Teil dieses Innenbereichs 9 ist der Bereich der Präparationsgrenze 10, also derjenige Bereich, der besonders präzise gearbeitet sein muss, um den Innenbereich 9 des Zahnersatzteils 1 nach außen hin gut abzudichten. Dies ist wichtig, um das Eindringen von Bakterien oder anderen zahnzerstörenden Substanzen zu verhindern.

Der Außenbereich ist mit Bezugsziffer 11 gekennzeichnet. Auf den Außenbereich können Verkleidungen bzw. Verblendungen wie beispielsweise aus Porzellan o. ä. aufgebracht werden. Die Außenseiten 11 können jedoch auch unverkleidet bleiben.

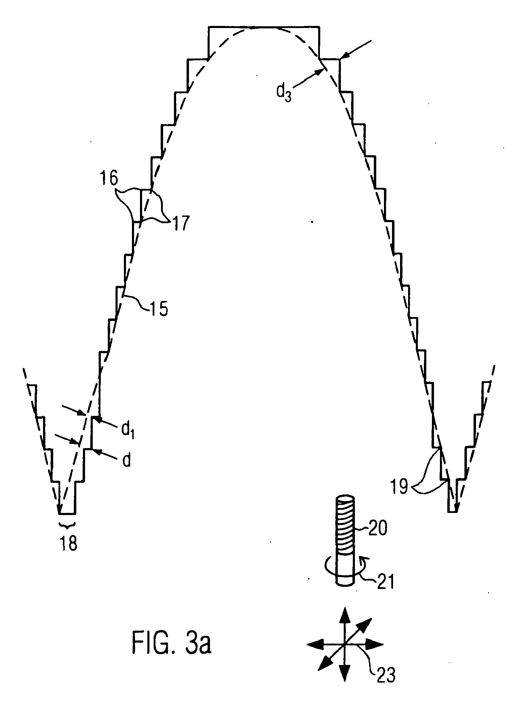

In Figur 3a ist die Innenseite eines Zahnersatzteils im Schnitt gezeigt, wie es erfindungsgemäß mit einem Rapidprototyping-Verfahren hergestellt worden sein kann. Im oben liegenden Teil der Innenseite bleibt die hergestellte Form innerhalb der gestrichelt dargestellten Linie 15. Die Linie 15 gibt diejenige Form an, die optimal zu dem beschliffenen Zahn oder Implantatspfosten passen würde. Diese Form kann beispielsweise durch einen entsprechenden Datensatz angegeben sein. In den Bereichen 17 der stufenförmigen Oberfläche des Zahnersatzteils liegt die Oberfläche desselben auf dieser Linie 15. In den Ecken 16 ist die Oberfläche von der Linie 15 beabstandet. Hier liegt beispielsweise ein Abstand d₃ vor.

In den Bereichen der Präparationsgrenze 10 (siehe Figur 2) steht die Oberfläche des hergestellten Zahnersatzteils über die Linie 15 nach außen über. Sowohl die konkaven Ecken (siehe Abstand d₁) als auch die konvexen Ecken (Abstand d₂) befinden sich außerhalb der Begrenzungsoberfläche 15. Hier ist ein Materialüberschuss 18 vorgesehen.

Bei der in Figur 3a rechten Seite der Präparationsgrenze liegen die Ecken 19 zwar von außen kommend auf der Linie 15, jedoch ist auch hier ein Materialüberschuss in den übrigen Bereichen gegeben.

Der Materialüberschuss 18 kann mit einem Fräswerkzeug 20 abgetragen werden. In Figur 3a ist ein solches Fräswerkzeug schematisch dargestellt (siehe Drehung 21), wobei es sich hierbei um eine Dreiachsfräsmaschine (siehe Bezugszeichen 23) handelt. Es können jedoch auch 3 + 1, 4- oder 5-achsige Fräsmaschinen vorgesehen sein.

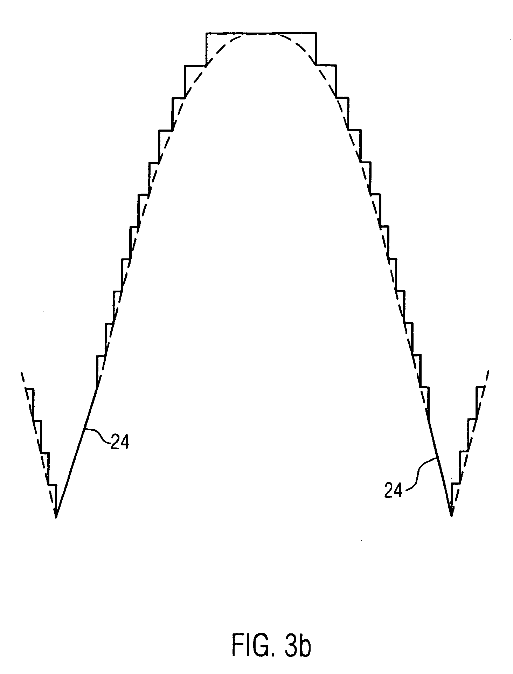

Das Ergebnis einer (Nach-)Bearbeitung des Bereichs der Präparationsgrenze 10 ist in Figur 3b gezeigt. Hier werden glatte Oberflächen 24 erzeugt, die möglichst exakt auf der gewünschten Linie 15 (gestrichelte Linie) liegen.

Während in Figur 3 der Fall gezeigt ist, bei dem lediglich im Bereich der Präparationsgrenze 10 (siehe Figur 2) ein Materialüberschuss vorhanden ist, besteht auch die Möglichkeit, die gesamte Innenseite 9 (siehe Figur 2) mit einem Materialüberschuss zu versehen und anschließend mit dem abtragenden Verfahren nachzubearbeiten. So wird dieser Bereich, der für einen guten Halt des Zahnersatzteils sorgt und der möglichst exakt die gewünschte Form aufweisen soll, besonders exakt gefertigt.

Die in Figur 3a und 3b nicht (bzw. nur unten im Ansatz) dargestellte Außenseite des Zahnersatzteils 1 ist stufenförmig, wie sie beispielsweise in Figur 1b gezeigt ist. Diese raue Oberfläche ist gut geeignet, um sie anschließend zu verkleiden.

Erfindungsgemäß ist es jedoch auch möglich, auch die Außenseite 11 oder einen Teil davon mit dem Fräsverfahren nachzubearbeiten. Auch kann auf der gesamten Außenseite oder einem Teil der Außenseite ein Materialüberschuss vorhanden sein.

Selbst wenn die gesamte Oberfläche des Zahnersatzteils, das mit dem Rapidprototyping-Verfahren hergestellt wurde, mit dem Fräsverfahren nachbearbeitet wird, so ergibt sich hier ein relativ schneller Fräsvorgang, da es in der Regel ausreicht, mit dem Fräswerkzeug über die Oberfläche einmal drüber zu streichen. Ein Abtragen von Volumenmaterial, wie es beispielsweise zum Formen der Aushöhlung der im Bereich der Innenseite 9 gegebenen Aushöhlung notwenig ist, kann hier entfallen. Die Fräsbearbeitung ist so relativ zügig durchführbar. Dies gilt allgemein für jedes abtragende Verfahren. Weiterhin wird hierbei relativ wenig Material zerspant, so dass die Herstellungskosten niedrig bleiben.

In Figur 3a ist ein Ausgangsdatensatz 15 gezeigt. Dieser ist so modifiziert worden, dass in dem Bereich der Präparationsgrenze ein Materialüberschuss entsteht. Ein Zahnersatzteil, das mit dem Ausgangsdatensatz 15 hergestellt worden wäre, hätte einen solchen Materialüberschuss nicht.

Der Bereich der Präparationsgrenze, der Innenbereich oder jeder andere Bereich, in dem ein Materialüberschuss angeordnet werden soll, kann automatisch erkannt und/oder festgelegt werden. So können z.B. die in Figur 3a gezeigten Formdaten 15 ausgewertet werden, um die entsprechenden Bereiche zu identifizieren. Auch können in einem Datensatz neben den eigentlichen Formdaten auch noch weitere Daten vorhanden sein, mit denen die Bereiche, die mit einem Materialüberschuss versehen werden sollen, gekennzeichnet sind. So kann z.B. der Bereich einer Präparationsgrenze oder der Innenbereich gekennzeichnet sein und diese Information ausgenutzt werden, um einen Materialüberschuss in diesem Bereich vorzusehen.

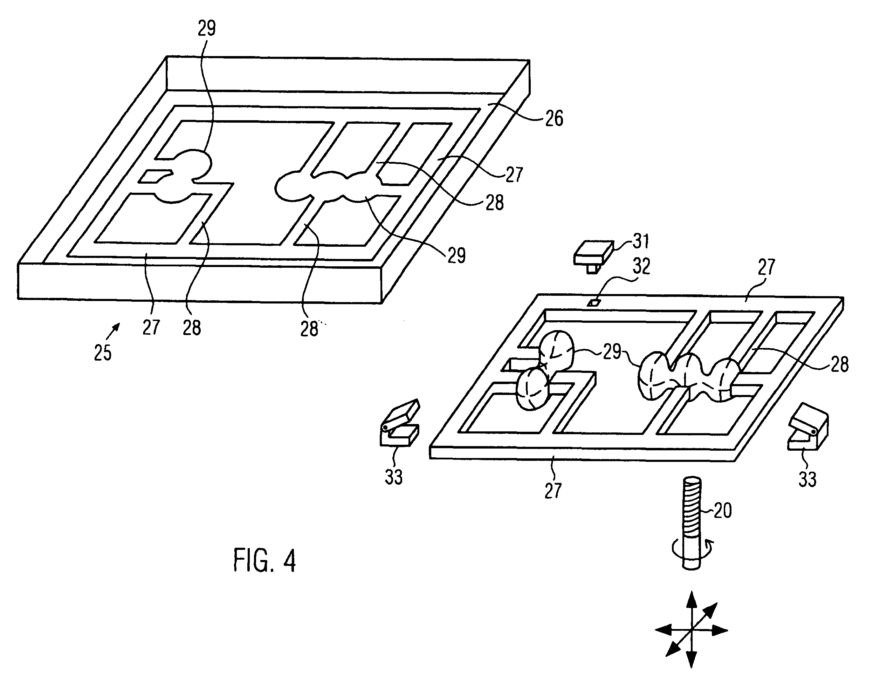

In Figur 4 ist unter Bezugszeichen 25 eine Rapidprototyping-Vorrichtung schematisch dargestellt. Sie ist in einem Zustand gezeigt, bei dem das hergestellte Werkstück im Schnitt zu erkennen ist und anschließend noch nach oben hin fertig gestellt werden muss. In einem Becken ist ein flüssiges oder pulverförmiges Material vorgesehen, das lokal modifiziert wird, um so eine verfestigte Struktur zu fertigen. In Figur 4 ist ein Rahmen 27 zu erkennen, von dem aus Stege 28 zu Zahnersatzteilen 29 gehen. Die Stege 28 können auch so miteinander verbunden sein, ohne dass ein Rahmen 27 vorliegt. Weiterhin können die Zahnersatzteile 29 auch so angeordnet sein, dass sie ohne Stege direkt von einem Rahmen 27 gehalten werden. Bevorzugt ist jedoch die in Figur 4 dargestellte Variante, bei der ein Rahmen 27 vorhanden ist, von dem Stege ausgehen, die die Zahnersatzteile 29 halten. Es sind beispielhaft zwei Zahnersatzteile gezeigt, links ein zweigliedriges und rechts ein dreigliedriges Zahnersatzteil 29. Zu jedem Zahnersatzteil 29 führen mehrere Stege 28, um die Zahnersatzteile 29 stabil zu halten. Dies ist für die Bearbeitung mit dem abtragenden Verfahren vorteilhaft.

Zur Durchführung des Rapid-Prototyping-Verfahrens wird ein Datensatz verwendet, in dem neben den Daten für die Zahnersatzteile auch Daten für Verbinder (Stege, Rahmen etc.) vorhanden sind. Ein solcher Datensatz kann vor Beginn des Rapid-Prototyping-Verfahrens aus einem oder mehreren Enddatensätzen erstellt werden.

Nach dem Durchführen des Rapidprototyping-Verfahrens können die Zahnersatzteile 29 komplett an dem Rahmen 27 herausgenommen werden. Während in Figur 4 zwei Zahnersatzteile 29 gezeigt sind, ist das Verfahren insbesondere für 50, 100, 150, 200, 250 oder noch mehr Zahnersatzteile vorteilhaft. Durch die Verbindung der Zahnersatzteile 29 mit einem Rahmen 27 können so auch mehr als 50, mehr als 100, 150, 200, 250 oder mehr Zahnersatzteile zusammen aus der Rapidprototyping-Vorrichtung entnommen werden. Weiterhin können alle Zahnersatzteile zusammen als ein Werkstück in eine Fräsvorrichtung (siehe Figur 4 rechts) überführt werden.

In Figur 4 rechts ist das mit dem Rapidprototyping-Verfahren fertig gestellte Werkstück dargestellt. Dieses weist den Rahmen 27 mit den Stegen 28 auf, die zu den nun vollständig geformten Zahnersatzteilen 29 führen. Die durch die Stege 28 gehaltenen Zahnersatzteile 29 können mit einem Fräswerkzeug 20 (in Figur 4 unten schematisch angedeutet) entsprechend, wie vorher erklärt, nachbearbeitet werden. Andere abtragende Verfahren als das Fräsen sind auch möglich.

Vorteilhaft ist, wenn eine Referenzierung 32 ausgebildet wird, mit der die Position der Zahnersatzteile 29 für den Fräsvorgang bestimmbar ist. Aus den Herstellungsdaten, mit denen das Rapidprototyping-Verfahren durchgeführt wird, ist die geometrische Beziehung zwischen den Zahnersatzteilen 29 und der Referenzierung 32 bekannt. Diese bekannte Relation kann dazu ausgenutzt werden, um aus der definierten Positionierung der Referenzierung 32 dann auf die Position der Zahnersatzteile 29 zu schließen. Zur Referenzierung können auch bestimmte Formen, wie Pyramiden, Quader, Rechtecke, Dreiecke, Halbkugeln oder Kombinationen hieraus eingesetzt werden. Jegliche charakteristische Form, die geeignet ist, um die Position des Werkstücks zu definieren bzw. zu identifizieren, ist hier geeignet. Die Referenzierung kann durch einen hervorstehenden Teil und/oder eine Vertiefung (s. Fig. 4) gegeben sein. In Figur 4 ist beispielsweise ein Element 31 der Maschine zur Durchführung eines abtragenden Verfahrens dargestellt, das in die Referenzierung 32 eingebracht werden kann, oder auf das die Referenzierung 32 geführt werden kann, so dass die Position des Rahmens 27 bzw. der Zahnersatzteile 29 eindeutig definiert ist.

Ebenso, wie es also möglich ist, durch eine Referenzierung die Zahnersatzteile wohldefiniert zu Positionieren, können die Zahnersatzteile auch zunächst undefiniert positioniert werden, die Position dann aber bestimmt werden, anhand der Referenzierung. Dann kann ein Fräswerkzeug oder eine entsprechende Einrichtung einer Maschine für ein abtragendes Verfahren die Position von einer entsprechenden abtragenden Einrichtung z.B. einem Fräskopf entsprechend anpassen.

Es können also zum Beispiel auch lediglich optisch detektierbare Formen oder Markierungen vorgesehen sein, wie beispielsweise Halbkugeln in einer bestimmten Geometrie oder ähnliches, die optisch leicht zu detektieren sind, um dann nach der Detektion der Referenzierung auf die Position der Zahnersatzteile 29 zurückzuschließen.

In Figur 4 sind noch Klemmbacken 33 schematisch gezeigt, mit denen der Rahmen 27 für den Fräsvorgang gehalten werden kann. Der Rahmen 27 kann auch in einen entsprechend vorbereiteten Halterahmen eingesetzt werden und anschließend in dieser Position fixiert werden. Dies ist für die gewünschte Stabilität bei der Fräsbearbeitung vorteilhaft. Es können auch mehr als zwei, drei, vier oder fünf Mittel zum Halten und/oder Fixieren/Definieren der Position des Werkstücks vorgesehen sein.

Nach der Behandlung mit dem Fräsvorgang, werden die einzelnen Zahnersatzteile von den Stegen durch Rausbrechen, oder Abtrennen getrennt. Hierzu können bei dem Rapidprototyping-Verfahren oder bei dem Fräsen (oder jedem anderen abtragenden Verfahren) entsprechende Sollbruchstellen an den Übergängen zwischen Steg oder Rahmen und dem Zahnersatzteil vorgesehen werden.

Zur Durchführung der Verfahren können erfindungsgemäß entsprechend angepasste Vorrichtungen vorgesehen sein, wie etwa eine kombinierte Rapidprototyping-Vorrichtung mit einer Einrichtung für ein abtragendes Verfahren wie etwa eine Fräseinrichtung oder entsprechend ausgerüstete Computer mit z.B. den erwähnten computerlesbaren Medien.

## Patentansprüche

1. Verfahren zum Erstellen eines Datensatzes, der für ein Rapid-Prototyping-Verfahren zum Herstellen eines Zahnersatzteils (29) verwendet werden kann, bei dem aus einem Ausgangsdatensatz (15) ein Enddatensatz erhalten wird, so dass in wenigstens einem Bereich eines mit dem Enddatensatz hergestellten Zahnersatzteils ein Materialüberschuss (18) vorhanden ist im Vergleich zu einem mit dem Ausgangsdatensatz hergestellten Zahnersatzteil, wobei mehrere Ausgangsdatensätze von verschiedenen Zahnersatzteilen zu Enddatensätzen verändert werden, und die mehreren Enddatensätze zu einem Produktionsdatensatz zusammengefasst werden, bei dem Verbinder wie etwa Stege (28), ein oder mehrere Rahmen (27) oder ein oder mehrere Gerüste vorgesehen werden, die die verschiedenen Zahnersatzteile (29) miteinander verbinden und wobei eine Referenzierung (32) ausgebildet wird, mit der die Position der Zahnersatzteile (29) für ein abtragendes Verfahren bestimmbar ist und wobei aus dem Datensatz, mit dem das Rapid-Prototyping-Verfahren durchgeführt wird, eine geometrische Beziehung zwischen den Zahnersatzteilen (29) und der Referenzierung (32) bekannt ist.

2. Verfahren nach Anspruch 1, **dadurch gekennzeichnet, dass** derjenige Bereich, in dem ein Materialüberschuss (18) vorgesehen wird, automatisch erkannt wird oder von einem Bediener vorgegeben wird oder aus spezifischer Information in dem Ausgangsdatensatz ausgelesen wird.

3. Verfahren nach Anspruch 1 oder 2, **dadurch gekennzeichnet, dass** ein Materialüberschuss (18) im Bereich der Präparationsgrenze (10) und/oder im Bereich der Innenseite (9) des Zahnersatzteils vorgesehen wird.

4. Verfahren zum Herstellen eines Zahnersatzteils, bei dem ein Verfahren nach einem der Ansprüche 1 bis 3 durchgeführt wird und anschließend das Zahnersatzteil/die Zahnersatzteile mit einem Rapid-Prototyping-Verfahren mit dem Enddatensatz/dem Produktionsdatensatz hergestellt wird/werden.

5. Verfahren nach Anspruch 4, **dadurch gekennzeichnet, dass** das hergestellte Zahnersatzteil/die hergestellten Zahnersatzteile anschließend mit einem abtragenden Verfahren bearbeitet wird/werden.

6. Verfahren nach Anspruch 5, **dadurch gekennzeichnet, dass** das abtragende Verfahren ein Fräsverfahren ist oder umfasst.

7. Verfahren nach Anspruch 5 oder 6, **dadurch gekennzeichnet, dass** das hergestellte Zahnersatzteil/die hergestellten Zahnersatzteile im Bereich, der mit einem Materialüberschuss (18) versehen ist, anschließend mit einem abtragenden Verfahren bearbeitet wird/werden.

8. Computerlesbares Medium mit Instruktionen, die in einen Computer geladen ein Verfahren nach einem der Ansprüche 1 bis 7 ausführen.

## Claims

1. Method for creating a data record which can be used for a rapid prototyping method for manufacturing a dental prosthesis (29), wherein an end data record is obtained from a starting data record (15), so that in at least one area of a dental prosthesis manufactured with the end data record, excess material (18) is provided compared to a dental prosthesis manufactured with the starting data record, wherein several starting data records of various dental prostheses are changed to become end data records, and the several end data records are summarised to become one production data record, where connecting means, such as webs (28), one or several frames (27) or one or several shells are provided which connect the different dental prostheses (29) with each other and wherein a referencing (32) is generated by means of which the position of the dental prostheses (29) is identifiable for a machining method and wherein from the data record being used for performing the rapid prototyping method a geometrical relation between the dental prostheses (29) and the referencing (32) is known.

2. Method according to claim 1, **characterized in that** the area where excess material (18) is provided is automatically identified or predetermined by an operator or read out from specific information in the starting data record.

3. Method according to claim 1 or 2, **characterized in that** excess material (18) is provided in the area of the preparation line (10) and/or in the area of the internal side (9) of the dental prosthesis.

4. Method for manufacturing a dental prosthesis, wherein a method according to one of claims 1 to 3 is performed and subsequently the dental prosthesis/the dental prostheses is/are manufactured with a rapid prototyping method with the end data record/the production data record.

5. Method according to claim 4, **characterized in that** the manufactured dental prosthesis/the manufactured dental prostheses is/are subsequently worked with a machining method.

6. Method according to claim 5, **characterized in that** the machining method is or comprises a milling method.

7. Method according to claim 5 or 6, **characterized in that** the manufactured dental prosthesis/the manufactured dental prostheses is/are subsequently worked with a machining method in the area which is provided with excess material (18).

8. Computer-readable medium with instructions which perform, when loaded into a computer, a method according to one of claims 1 to 7.

## Revendications

1. Procédé pour l'établissement d'un jeu de données, qui peut être utilisé pour un procédé de prototypage rapide destiné à la fabrication d'une pièce de prothèse dentaire (29), selon lequel on obtient, à partir d'un jeu de données initiales (15), un jeu de données finales de façon à ce que dans au moins une zone d'une pièce de prothèse dentaire fabriquée à l'aide du jeu de données finales, il existe un surplus ou excédent de matière (18) par comparaison avec une pièce de prothèse dentaire fabriquée à l'aide du jeu de données initiales,
procédé
d'après lequel plusieurs jeux de données initiales de différentes pièces de prothèse dentaire sont modifiés en jeux de données finales et les plusieurs jeux de données finales sont regroupés en un jeu de données de production pour lequel sont prévus des connecteurs de liaison ou éléments de liaison tels que sensiblement des nervures (28), un ou plusieurs cadre (27) ou une ou plusieurs ossatures, qui relient ensemble les différentes pièces de prothèse dentaire (29), et d'après lequel on forme une référence (32) à l'aide de laquelle peut être déterminée la position des pièces de prothèse dentaire (29) pour un procédé d'enlèvement de matière, et
d'après lequel à partir du jeu de données à l'aide duquel est effectué le procédé de prototypage rapide, on connaît une relation géométrique entre les pièces de prothèse dentaire (29) et la référence (32).

2. Procédé selon la revendication 1, **caractérisé en ce que** la zone dans laquelle est prévu un excédent de matière (18) est détectée automatiquement ou est prescrite par une personne de service ou est lue à partir d'une information spécifique dans le jeu de données initiales.

3. Procédé selon la revendication 1 ou la revendication 2, **caractérisé en ce qu'**un excédent de matière (18) est prévu dans la zone de la limite de préparation (10) et/ou dans la zone du côté intérieur (9) de la pièce de prothèse dentaire.

4. Procédé de fabrication d'une pièce de prothèse dentaire d'après lequel on met en oeuvre un procédé selon l'une des revendications 1 à 3, et on fabrique ensuite la pièce de prothèse dentaire/les pièces de prothèse dentaire à l'aide d'un procédé de prototypage rapide avec le jeu de données finales/le jeu de données de production.

5. Procédé selon la revendication 4, **caractérisé en ce que** la pièce de prothèse dentaire fabriquée/les pièces de prothèse dentaire fabriquées est/sont ensuite usinée(s) par un procédé par enlèvement de matière.

6. Procédé selon la revendication 5, **caractérisé en ce que** le procédé par enlèvement de matière comprend un procédé de fraisage.

7. Procédé selon la revendication 5 ou la revendication 6, **caractérisé en ce que** la pièce de prothèse dentaire fabriquée/les pièces de prothèse dentaire fabriquées est/sont ensuite usinée(s) par un procédé par enlèvement de matière dans la zone qui est dotée d'un excédent de matière (18).

8. Support lisible par ordinateur, comportant des instructions, qui, chargées dans un ordinateur, exécutent un procédé selon l'une des revendications 1 à 7.
